# EUROPEAN PATENT SPECIFICATION

(11) **EP 2 268 108 B1**
(45) Date of publication and mention of the grant of the patent: **01.02.2012**
(21) Application number: 10165877.1
(22) Date of filing: 14.06.2010
(51) Int. Cl.: H05B 39/04, H02M 7/5383

(54) **A converter device for driving light sources**
Wandler zur Steuerung von Lichtquellen
Convertisseur pour alimenter des sources lumineuses

(30) Priority: 22.06.2009 IT TO20090476
(43) Date of publication of application: 29.12.2010
(73) Proprietor: OSRAM AG, 81543 München (DE); OSRAM S.P.A. - SOCIETA' RIUNITE OSRAM EDISON CLERICI, 20126 Milano (IT)
(72) Inventor: Faccin, Marco, 31031, Caerano San Marco (Treviso) (IT); Haeusser-Boehm, Helmut, 83301, Traunreut (DE); Siessegger, Bernhard, 81479, Muenchen (DE)
(74) Representative: Bosotti, Luciano

(56) References cited:
- EP-A1- 0 957 662
- EP-A2- 0 917 412
- EP-A2- 1 239 707
- EP-A2- 1 608 207
- US-A- 5 592 367

## Description

### Field of the invention

This disclosure relates to electronic converters.

This disclosure was devised with specific attention paid to its possible application to drive a light source such as, for example, a LED module or a low voltage halogen lamp.

### Description of the related art

From the state of the art there are known various solutions of electronic converters, comprising a self-oscillating output stage, for example a self-oscillating half-bridge. Such converters are often used to supply light sources such as low voltage halogen lamps (see EP 957 662 A1).

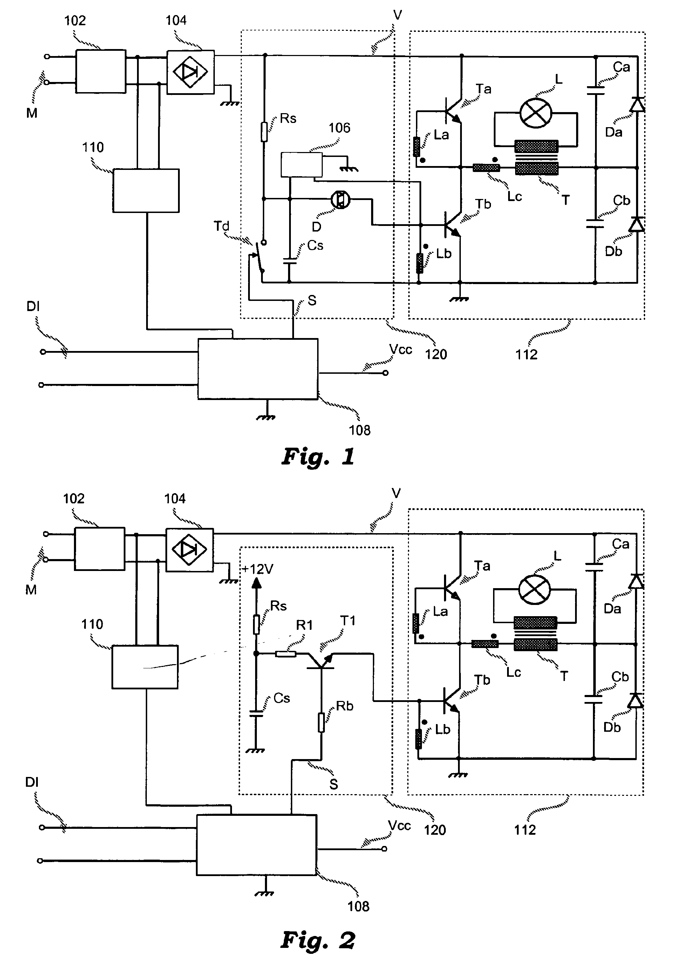

Figure 1 shows the main components of such a converter. Specifically, the converter receives as input, for example from the mains, a supply signal M. After being optionally filtered by a line filter 102, the supply signal is rectified by a rectifier 104, so as to generate a rectified voltage V, with a double frequency with respect to the supply signal.

In the example considered herein, the converter comprises a self-oscillating half-bridge 112, having a supply line for the supply signal V. The half-bridge 112 comprises two power bipolar power transistors (BJT) Tₐ and T_{b}, connected in series between voltage V and ground. The transistors Tₐ e T_{b} are driven by a current transformer comprising three windings Lₐ, L_{b} e L_{c}. Specifically, the winding Lₐ is connected between the base and the emitter of the transistor Tₐ and the winding L_{b} is connected between the base and the emitter of the transistor T_{b}, which is also connected to ground. The third winding L_{c} is connected between the emitter of the transistor Tₐ (or the collector of the transistor T_{b}) and a transformer T, which supplies at least one light source L. The transformer T is also connected to a node between two capacitors Cₐ and C_{b}, connected in series between the voltage V and ground. The capacitors Cₐ and C_{b} can also have respective diodes Dₐ and D_{b} connected in parallel.

The half-bridge 112 is associated to a starter circuit 120, comprising a resistor Rₛ and a capacitor Cₛ connected in series between the voltage V and ground. Typically, the node between the components Rₛ e Cₛ is connected to a diac D, which is also connected to the base of the transistor T_{b}.

The capacitor Cₛ is adapted to be charged by voltage V through the resistor Rₛ. As soon as the voltage through the capacitor Cₛ reaches a predetermined level, the diac D, that serves as a trigger component, breaks down and the transistor T_{b} is activated.

Subsequently, the voltage at the centre point of the half-bridge (between Tₐ and T_{b}) rapidly changes from voltage V to zero, so as to apply a positive voltage to the secondary winding L_{b}, which keeps the transistor Tb activated.

Such a circuit comprises moreover a stop circuit 106 for the diac D, adapted to discharge the capacitor Cₛ in order to avoid a double operation of the transistor T_{b}, or in general to prevent the propagation of noise through the diac D during normal operation.

Further details of the operation of an electronic converter of this kind are not particularly relevant for the subject matter of the present disclosure, making it unnecessary to provide herein a detailed description thereof.

As already mentioned before, the converter operates on a voltage V that is a rectified voltage, with a double frequency with respect to the frequency of the supply signal M. The oscillation of the half-bridge 112 is therefore stopped at each zero crossing of the supply M, and then retriggered.

Various solutions make use of this behaviour in order to regulate the brightness of the light source L, performing the function known as "dimming". In particular, the converter may comprise a further input DI, for receiving a dimming regulation command, for example via control commands such as "Digital Addressable Lighting Interface" (DALI).

These regulation commands on the line DI are supplied to a control unit 108, for example a micro-processor fed with a Vcc voltage. For example, the control unit 108 can drive, through a driving signal S, a switch T_{d}, connected in parallel with the capacitor Cₛ, with a pulsed signal modulated with a Pulse-Width Modulation (PWM), in order to delay the charge of the capacitor Cₛ and therefore the activation of the half-bridge 112 by the diac D.

The PWM signal may also be synchronized with the supply signal M. For example, the control unit 108 can be connected to a zero crossing detector (ZCD) 110, in turn connected to the supply line M or to the filtered supply signal downstream the block 102, in such a way as to synchronize the driving of the switch T_{d} with the supply signal M.

In this way, the system performs substantially the function of controlling the "leading edge", making the half-bridge oscillate only during a given, selectively adjustable portion of the half-period of the supply signal M.

This architecture of an electronic converter offers therefore a low-cost solution for dimming the light generated by the light source L.

### Object and summary of the invention

The inventors have observed that the charging speed of the capacitor Cₛ, and therefore the activation of the half-bridge 112, are dependent on the supply voltage M. This is a drawback in that the activation instant of the half-bridge, and therefore the actual dimming level as well, cannot be set accurately by means of the circuit of Figure 1.

This problem has so far been dealt with, for example, with a half-bridge comprised of two transistors (MOSFETs), directly controlled by a micro-processor that is adapted to translate the regulation commands into a control of the PWM type.

The inventors have observed that this solution has drawbacks associated both to the complex circuitry and to the use of MOSFETs, which can reveal themselves sensitive to the current surges that may take place in this kind of converters. Moreover, the related control system is an important source of electromagnetic interference (EMI).

The object of the invention is therefore to provide an electronic converter that can avoid the above mentioned drawbacks. Starting circuits without Diac, for starting a self-oxillating converter are already known (see EP 917412 A2)

According to the invention, such an object is achieved by means of a device having the features set forth in the claims that follow.

The claims are an integral part of the technical disclosure of the invention provided herein.

In an embodiment, the electronic converter comprises, in place of the diac and of the related stop circuit, a switch that selectively connects a start-up capacitor to the half-bridge (for example at the base of the lower transistor of the half-bridge) in order to start the half-bridge oscillation directly.

In an embodiment, the start-up capacitor is adapted to be charged through a resistor. After a predetermined time interval the switch, which acts as a trigger element, is closed and the lower transistor of the half-bridge is activated, thereby starting the half-bridge oscillation as well.

In an embodiment, the switching is synchronised with the supply signal.

In an embodiment, the switch is driven by a control unit with a square wave signal. For example, the control unit applies to the switch a pulsed signal, and the activation ad deactivation times of the switch are controlled on the basis of a command received on a control line.

The control unit may be configured, for example through software, so as to detect a dimming command and to consequently adjust the activation time of the switch.

In an embodiment, the start-up capacitor is adapted to be charged from a direct voltage (for example 3 V, 5 V or 12 V), which is therefore definable as a low voltage (120 - 1500 V DC) or as an extra low voltage (120 V DC).

The device described herein offers therefore a low cost solution for an adjustable electronic converter, because only a limited number of components is required for the circuit which starts the half-bridge oscillation.

### Brief description of the annexed representations

The invention will now be described, by way of example only, with reference to the enclosed representations, wherein:
- Figure 1 has been previously described,
- Figure 2 is a circuit diagram showing a first embodiment of an electronic converter,
- Figure 3 is a diagram showing an example of the driving signal of the starter circuit of Figure 2, and
- Figures 4 and 5 are circuit diagrams showing further embodiments of the starter circuit.

### Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Figures 2 to 5 show embodiments of starter circuits for an electronic converter, which are based, as for their general architecture, on the same layout as in Figure 1. As a consequence, the parts, elements and components which are identical or equivalent to those already described with reference to Figure 1 are indicated in Figures 2 to 5 by the same reference numerals. For the sake of brevity, the description thereof will therefore not be repeated.

The following description focuses on the half-bridge starter circuit, and refers i.a. to the criteria that make it possible to start the oscillation of a self-oscillating output stage of an electronic converter. The person skilled in the art will therefore appreciate that the scope of the invention is not to be construed as limited to the specific solution of the self-oscillating output stage described herein.

The embodiment shown in Figure 2 comprises a switch T₁, controlled by a control unit 108 on the basis of a driving signal S.

In the presently considered embodiment, the switch T₁ is connected to the node between a resistor Rₛ and a start-up capacitor Cₛ, and the base of the half-bridge transistor T_{b}.

In the presently considered embodiment, the switch T₁ consists of a bipolar junction npn transistor (BJT), the collector of which is connected, via a resistor R₁, to the node between the resistor Rₛ and the capacitor Cₛ, the emitter is connected to the base of the transistor T_{b} and the base of the transistor T₁ is connected, via a resistor R_{b}, to the control unit 108.

When the switch T₁ is open, i.e. non conductive, the capacitor Cₛ, which represents the lower branch of a divider R_{c} connected e.g. to a 12 V voltage, is charged by the resistor Rₛ.

When the switch T₁ is closed, i.e. conductive, the capacitor Cₛ is connected to the base of the transistor T_{b}, and the half-bridge oscillation is activated if the charge of the capacitor Cₛ is sufficient.

By controlling the closing time of the switch T₁ it is therefore possible to adjust the moment when the capacitor Cₛ starts the half-bridge oscillation 112.

For example, the switching of the switch T₁ can be controlled on the basis of an attenuation signal received at the input DI (for example DALI commands). The respective configuration of the control unit (in the present case a micro-processor) as regards the determination of the attenuation command and the generation of the driving signal S according to what previously described can be attained, for example, via software, according to known criteria.

In an embodiment, the control unit 108 is connected to a block 110, for example a zero crossing detector, which is sensitive to the supply signal M (or to its version filtered at the output of the block 102), i.e. the voltage V. In this way, the signal received from the block 110 can be used to synchronise the driving signal S driving the switch T₁ with the supply signal M.

For example, in an embodiment, the zero crossing detector 110 signals to the control unit 108 the zero crossing of the supply signal M. Subsequently, a counter or timer is activated in the control unit 108, which activates the switch T₁ after an interval t_{d}, controlled on the basis of an attenuation signal received at the input DI.

In an embodiment, the switch T₁ is opened at every zero crossing of the supply signal M. In this case, the resistor Rₛ and the capacitor Cₛ are preferably sized so as to charge the capacitor Cₛ to a sufficient extent during the interval t_{d}.

However, this embodiment has the disadvantage that, once the half-bridge oscillation has been activated, the capacitor Cₛ is continuously discharged through the winding L_{b}. For example, this could cause a current stream of approx. 4 mA for a resistor R = 3 kΩ and for a capacitor Cs = 1 uF.

In order to counter this problem, in an embodiment the switch T₁ is opened when the half-bridge oscillation has been started.

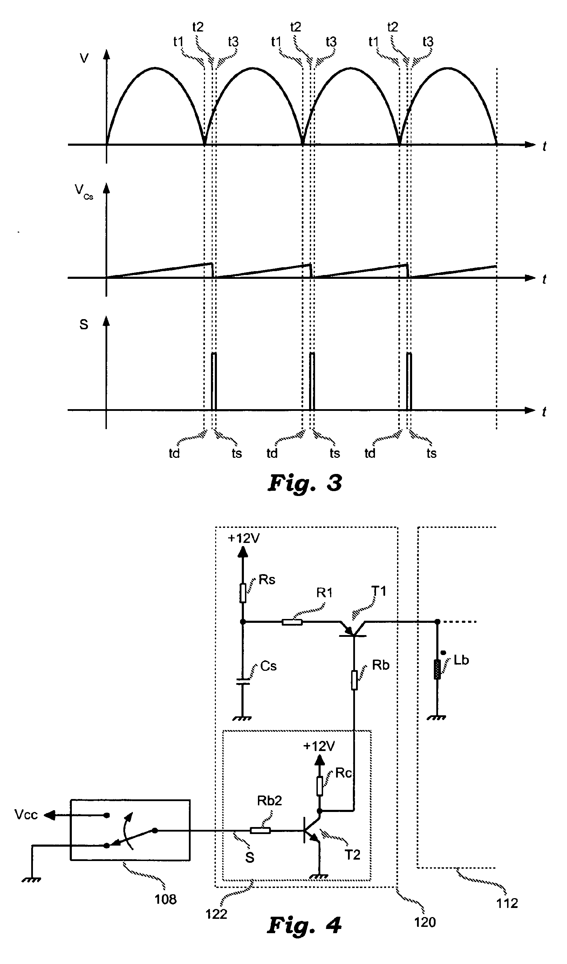

Figure 3 shows an example of this system for driving the switch T₁.

In the presently considered embodiment, the zero crossing detector 110 signals for each instant t₁ the zero crossing of the supply signal M to the control unit 108.

Subsequently, a counter or timer is activated in the control unit, which closes the switch T₁ after an interval t_{d}, i.e. at each instant t₂, wherein the value of the interval t_{d} is controlled as a function of the attenuation signal received at the input DI.

Finally, once the half-bridge oscillation has been started, the switch T₁ is opened again after an interval tₛ, i.e. at each instant t₃.

In this way, the capacitor Cₛ is discharged only during a period tₛ, significantly reducing losses. This also allows to size resistor Rₛ and capacitor Cₛ in such a way that the capacitor Cₛ is charged between an instant t₃ and the following instant t₂. For example, in the embodiment shown in Figure 3, the voltage V_{Cs} of the capacitor Cₛ grows with substantial linearity between an instant t₃ and the following instant t₂. However, in order to ensure that the capacitor Cₛ is sufficiently charged at each instant t₂, the constant Cₛ ■ Rₛ is preferably much lower than T/2, wherein T = 1/F and F is the mains voltage.

The inventors have observed that the use of a BJT npn transistor, as shown in Figure 2, has the drawback of currents possibly flowing through T₁ even when its base is connected to zero volt, because the emitter turns to negative when T₁ is switched on with a frequency which equals the one of the half-bridge oscillation.

In an embodiment, in order to avoid this problem, the driving signal S stays floating between an instant t₃ and the following instant t₂. In this case a further resistor is provided, connected between the base and the emitter of the transistor T₁. In this way no current flows through the transistor T₁, because the base-emitter voltage V_{BE} amounts to zero volt.

Subsequently, the block 108 applies again, between the instant t₂ and the instant t₃ (i.e. during the time interval tₛ), a voltage to the base of the transistor T₁, in order to start the oscillation of the half-bridge 112.

The time tₛ can be predetermined (e.g. determined through a counter or timer), or dynamically detected through the detection of whether the half-bridge oscillation has actually been started.

The inventors have observed that for the control of this kind of electronic converters use is normally made of low cost microcontrollers having low performance features (for example a low clock frequency). This, even though the half-bridge oscillation has already been started, can lead to the interval tₛ being rather long (for example 200 us) and the switch T₁ not being deactivated immediately.

In an embodiment, in order to counter this problem, instead of a BJT npn transistor a BJT pnp transistor is used. In this case, instead of applying a positive base-emitter voltage V_{BE}, a negative base-emitter voltage V_{BE} is used. In this way, when the voltage to capacitor Cₛ decreases owing to discharging, the transistor T₁ is closed "automatically" as well.

Figure 4 shows a related embodiment wherein the capacitor Cₛ is charged from a +12 V voltage, and wherein the control unit generates a driving signal S which switches between the logic levels 0V and Vcc (for example 3 V or 5 V). In this case, in order to correctly actuate the transistor T₁, a conversion module 122 is provided that converts the respective voltage levels (for example from Vcc to +12 V).

In the presently considered embodiment, the conversion module comprises a switch T₂ connected via a "pull-up" resistor R_{c} to voltage 12V. For example, it is possible to use a BJT npn transistor as the switch T₂, wherein the collector is connected to the pull-up resistor Rₛ, the emitter is connected to ground and the base of transistor T₂ is connected through a resistor R_{b2} to the signal S coming from the control unit 108. In this case, the same driving signal S can be used as previously described with reference to Figures 2 and 3. In particular, the use of a BJT pnp transistor would require the driving signal S to be inverted. However, in the embodiment shown in Figure 4, this inversion is already carried out by the conversion module 122, which substantially works as an inversion stage.

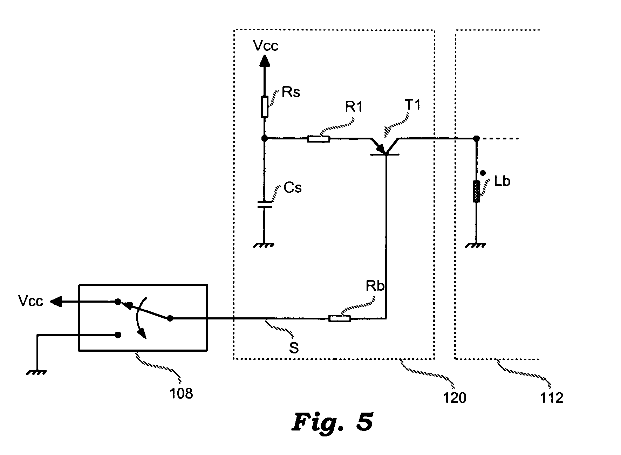

Figure 5 shows an embodiment which does not require a conversion module of the logic levels 122.

In this embodiment, the capacitor Cₛ is charged directly from voltage Vcc, and the base of the transistor T₁ is connected through resistor R_{b} directly to the signal S. As previously mentioned, in this case it is foreseen that the driving signal S has a wave form which is inverted with respect to the driving signal shown with reference to Figure 3.

In the preceding embodiments, it has been chosen to charge the RC network comprised of the resistor Rₛ and the capacitor Cₛ with a low or extra low direct voltage (for example Vcc or 12 V). Those skilled in the art will appreciate that it would be possible to charge the RC network also directly from the supply signal M (or from its rectified version V). However, the use of a low voltage regulated signal offers the advantage that the charging time of the capacitor Cₛ or its operation are completely independent from the variations of the supply signal M. Moreover, losses on the resistor Rₛ are remarkably reduced if the latter is supplied by a low voltage. This also allows to use a small sized resistor Rₛ, because it is not necessary for the resistor Rₛ to dissipate an excessive power and/or bear an excessive voltage at its ends.

Of course, without prejudice to the underlying principles of the invention, the details and the embodiments may vary, even appreciably, with respect to what has been described by way of example only, without departing from the scope of the invention as defined by the annexed claims.

## Claims

1. A device for driving light sources (L), including:
- a self-oscillating output stage (112) for driving at least one light source (L),
- a starter circuit (120) for starting the self-oscillation of said output stage (112), and
- a control circuit (108) configured for driving (S) said starter circuit (120) for selectively starting the self-oscillation of said output stage (112),
said starter circuit (120) including:
- a RC network (Rₛ, Cₛ) with a capacitor (Cₛ) being chargeable from a voltage (12 V, Vcc), and
- an electronic switch (T₁) driven (S) by said control circuit (108) for selectively connecting said capacitor (Cₛ) of said RC network RC (Rₛ, Cₛ) to said output stage (112) for starting the self-oscillation of said output stage (112).

2. The device of Claim 1, wherein said control circuit (108) includes a control line (DI) for receiving a dimming command for said at least one light source (L), and wherein said control circuit (108) is configured for selectively starting the self-oscillation of said output stage (112) as a function of said dimming command.

3. The device of any of the previous claims, wherein said self-oscillating output stage (112) is a half-bridge.

4. The device of any of the previous claims, wherein said RC network RC (Rₛ, Cₛ) is charged from a DC voltage (12 V, Vcc), preferably chosen as a DC low or extra low voltage.

5. The device of any of the previous claims, with said self-oscillating output stage (112) being fed via an AC supply signal (M, V), and wherein said control circuit (108) is configured for closing said switch (T₁) each time a first time interval (*t_{d}*) elapsed since the zero-crossing of said AC supply signal (M, V).

6. The device of Claim 5, wherein said control circuit (108) is configured for opening said switch (T₁) at each zero-crossing of said AC supply signal (M, V).

7. The device of Claim 5, wherein said control circuit (108) is configured for opening said switch (T₁) when a second time interval (*tₛ*) elapsed since the moment of closing of said switch (T₁).

8. The device of Claim 5, wherein said control circuit (108) is configured for opening said switch (T₁) when the oscillation of said output stage (112) has been started.

9. The device of any of the previous claims, wherein said switch (T₁) is a bipolar junction transistor.

## Patentansprüche

1. Eine Vorrichtung zur Steuerung von Lichtquellen (L), umfassend:
eine selbstoszillierende Ausgabestufe (112) zur Steuerung von zumindest einer Lichtquelle (L),
einen Startschaltkreis (120) zum Starten der Selbstoszillation der Ausgabestufe (112), und
einen Steuerschaltkreis (108), der zum Steuern (S) des Startschaltkreises (120) zum wahlweisen Starten der Selbstoszillation der Ausgabestufe (112) gestaltet ist, wobei der Startschaltkreis (120) aufweist:
- ein RC-Netzwerk (Rₛ, Cₛ) mit einem Kondensator (Cₛ), der durch eine Spannung (12 V, Vcc) aufladbar ist, und
- einen elektronischen Schalter (T₁), der durch den Steuerschaltkreis (108) zum wahlweisen Verbinden des Kondensators (Cₛ) des RC-Netzwerks RC (Rₛ, Cₛ) mit der Ausgabestufe (112) zum Starten der Selbstoszillation der Ausgabestufe (112) angetrieben (S) ist.

2. Vorrichtung nach Anspruch 1, wobei der Steuerschaltkreis (108) eine Steuerleitung (DI) zum Empfang eines Dimm-Befehls für die zumindest eine Lichtquelle (L) aufweist, und wobei der Steuerschaltkreis (108) zum wahlweisen Starten der Selbstoszillation der Ausgabestufe (112) als Funktion des Dimm-Befehls gestaltet ist.

3. Vorrichtung nach irgendeinem der vorigen Ansprüche, wobei die Selbstoszillationsausgabestufe (112) eine Halbbrücke ist.

4. Vorrichtung nach irgendeinem der vorigen Ansprüche, wobei das RC-Netzwerk RC (Rₛ, Cₛ) durch eine Gleichstromspannung (12 V, Vcc) geladen wird, die vorzugsweise als eine Gleichstromniedrigoder besonders niedrige Spannung ausgewählt wurde.

5. Vorrichtung nach irgendeinem der vorigen Ansprüche, wobei die selbstoszillierende Ausgabestufe (112) über ein Wechselstromversorgungssignal (M, V) versorgt wird, und wobei der Steuerschaltkreis (108) zum Schließen des Schalters (T₁) gestaltet ist, jedesmal, wenn ein erstes Zeitintervall (*t_{d}*) seit dem Null-Durchgang des Wechselstromversorgungssignals (M, V) abgelaufen ist.

6. Vorrichtung nach Anspruch 5, wobei der Steuerschaltkreis (108) zum Öffnen des Schalters (T₁) bei jedem Null-Durchgang des Wechselstromversorgungssignals (M, V) gestaltet ist.

7. Vorrichtung nach Anspruch 5, wobei der Steuerschaltkreis (108) zum Öffnen des Schalters (T₁) gestaltet ist, wenn ein zweites Zeitintervall (*tₛ*) seit dem Moment des Schließens des Schalters (T₁) abgelaufen ist.

8. Vorrichtung nach Anspruch 5, wobei der Steuerschaltkreis (108) zum Öffnen des Schalters (T₁) gestaltet ist, wenn das Oszillieren der Ausgabestufe (112) gestartet wurde.

9. Vorrichtung nach irgendeinem der vorigen Ansprüche, wobei der Schalter (T₁) ein bipolarer Flächentransistor ist.

## Revendications

1. Un dispositif pour piloter des sources lumineuses (L), comprenant :
- un étage de sortie auto-oscillant (112) pour piloter au moins une source lumineuse (L),
- un circuit de démarrage (120) pour démarrer l'autooscillation dudit étage de sortie (112), et
- un circuit de contrôle (108) configuré pour piloter (S) ledit circuit de démarrage (120) pour démarrer sélectivement l'auto-oscillation dudit étage de sortie (112), ledit circuit de démarrage (120) comprenant :
- un réseau RC (Rₛ, Cₛ) avec un condensateur (Cₛ) qui peut être chargé à partir d'une tension (12 V, V_{cc}), et
- un commutateur électronique (T₁) piloté (S) par ledit circuit de contrôle (108) pour relier sélectivement ledit condensateur (Cₛ) dudit réseau RC (Rₛ, Cₛ) audit étage de sortie (112) pour démarrer l'auto-oscillation dudit étage de sortie (112).

2. Le dispositif de la revendication 1, dans lequel ledit circuit de contrôle (108) comprend une ligne de contrôle (DI) pour recevoir une commande de variateur pour ladite au moins une source lumineuse (L), et dans lequel ledit circuit de contrôle (108) est configuré pour démarrer sélectivement l'auto-oscillation dudit étage de sortie (112) en fonction de ladite commande de variateur.

3. Le dispositif de l'une des revendications précédentes, dans lequel ledit étage de sortie auto-oscillant (112) est un demi-pont.

4. Le dispositif de l'une des revendications précédentes, dans lequel ledit réseau RC (Rₛ, Cₛ) est chargé à partir d'une tension continue (12 V, V_{cc}), de préférence choisie en tant que basse tension ou très basse tension continue.

5. Le dispositif de l'une des revendications précédentes, dans lequel ledit étage de sortie auto-oscillant (112) est alimenté via un signal d'alimentation en courant alternatif (M, V), et dans lequel ledit circuit de contrôle (108) est configuré pour fermer ledit commutateur (T₁) chaque fois qu'un premier intervalle de temps (t_{d}) s'est écoulé depuis le passage par zéro dudit signal d'alimentation en courant alternatif (M, V).

6. Le dispositif de la revendication 5, dans lequel ledit circuit de contrôle (108) est configuré pour ouvrir ledit commutateur (T₁) à chaque passage par zéro dudit signal d'alimentation en courant alternatif (M, V).

7. Le dispositif de la revendication 5, dans lequel ledit circuit de contrôle (108) est configuré pour ouvrir ledit commutateur (T₁) lorsqu'un second intervalle de temps (t*ₛ*) s'est écoulé depuis le moment de la fermeture dudit commutateur (T₁).

8. Le dispositif de la revendication 5, dans lequel ledit circuit de contrôle (108) est configuré pour ouvrir ledit commutateur (T₁) lorsque l'oscillation dudit étage de sortie (112) a été démarrée.

9. Le dispositif de l'une des revendications précédentes, dans lequel ledit commutateur (T₁) est un transistor à jonction bipolaire.
